# EUROPÄISCHE PATENTSCHRIFT

(11) **EP 0 734 303 B1**
(45) Veröffentlichungstag und Bekanntmachung des Hinweises auf die Patenterteilung: **02.05.2003**
(21) Anmeldenummer: 95905064.2
(22) Anmeldetag: 14.12.1994
(51) Int. Cl.: B23K 1/008

(54) **VORRICHTUNG ZUR WÄRMEÜBERTRAGUNG IN EINER KONVEKTIONSWÄRMEANLAGE, INSBESONDERE IN EINER KONVEKTIONSLÖTANLAGE**
HEAT-TRANSFER DEVICE FOR USE IN A CONVECTIVE-HEAT INSTALLATION, IN PARTICULAR A CONVECTIVE-HEAT SOLDERING INSTALLATION
DISPOSITIF POUR TRANSFERER DE LA CHALEUR DANS UNE INSTALLATION DE CHAUFFAGE PAR CONVECTION, NOTAMMENT DANS UNE INSTALLATION DE BRASAGE PAR CONVECTION

(30) Priorität: 14.12.1993 DE 4342634
(43) Veröffentlichungstag der Anmeldung: 02.10.1996
(73) Patentinhaber: LEICHT, Helmut, Walter, D-86343 Königsbrunn (DE)
(72) Erfinder: LEICHT, Helmut, Walter, D-86343 Königsbrunn (DE)
(74) Vertreter: VOSSIUS & PARTNER
(86) Internationale Anmeldenummer: EP9404143
(87) Internationale Veröffentlichungsnummer: WO95016537

(56) Entgegenhaltungen:
- WO-A-82/03681
- FR-A- 2 690 736
- US-A- 4 315 042
- US-A- 5 038 496
- US-A- 5 163 599
- PATENT ABSTRACTS OF JAPAN vol. 012 no. 369 (E-665) ,4.Oktober 1988 & JP,A,63 121232 (HITACHI LTD) 25.Mai 1988,
- PATENT ABSTRACTS OF JAPAN vol. 013 no. 496 (E-843) ,9.November 1989 & JP,A,01 200537 (HITACHI LTD) 11.August 1989,

## Beschreibung

Die Erfindung betrifft eine Vorrichtung zur Wärmeübertragung in einer Konvektionswärmeanlage, insbesondere in einer Konvektionslötanlage.

Konvektionslötanlagen werden zum Reflow-Löten verwendet. Dabei besteht das Problem, daß das System "Lötgut/Lötanlagen" aufgrund der relativ schlechten Wärmeübertragung schwierig stabil gehalten werden kann. Insbesondere beim Einbringen relativ massereichen Lötguts ist die Regelung des Systems derart träge, daß nur kleine Durchlaufgeschwindigkeiten möglich sind.

Die heute zum Einsatz kommenden Vorrichtungen zur Wärmeübertragung bei Konvektionslötanlagen (Umluft- oder Konvektionsöfen) übertragen Wärme mit Hilfe umgewälzter Gase in der Regel mit Luft. Sie verfügen im allgemeinen über mehrere Temperaturzonen. Da diese Wärmeübertragung vom Ofen zum Lötgut relativ langsam vonstatten geht (kleines α) sind die Anlagen meist recht lang und die elektrische Leistung der Systeme hoch. Elektrische Anschlußleitungen von 90 kW und mehr sind keine Seltenheit.

Um die Wärmeübertragung zu beschleunigen, werden kombinierte Systeme angeboten, bei denen eine direkte IR-Strahlungserwärmung durch eine Gasströmung überlagert wird. Die Gasströmung soll die Nachteile der reinen IR-Strahlung, wie Abschattungseffekte usw. ausgleichen, so daß punktuell Überhitzungen des Werkstücks verhindert werden.

Bei den meisten Werkstücken, die das Lötgut sind, besteht das Problem darin, daß sie sowohl rasch als auch zuverlässig erwärmt werden sollen, aber eine Überhitzung einzelner Teile ausgeschlossen werden muß. Die Forderung nach schneller Erwärmung verlangt eine große Temperaturdifferenz (ΔT) zwischen der Wärmequelle und dem Lötgut. Um eine Überhitzung des Randbereichs oder von z.B. abstehenden Bauteilen einer Baugruppe auszuschließen, wäre es wiederum wünschenswert, daß ΔT zwischen wärmezuführendem Gas und gewünschter Maximaltemperatur am Werkstück möglichst klein zu halten.

Die einzige Möglichkeit diesen Widerspruch zu lösen, besteht darin, ein möglichst kleines ΔT zu wählen und das wärmeübertragende Gas möglichst rasch am Werkstück vorbeiströmen zu lassen.

Das Hauptproblem der heute verfügbaren Konvektions-Systeme besteht darin, daß die Regelung der Temperaturschwankungen im System schwierig zu beherrschen ist. Insbesondere dann, wenn große Massen auf niedrigem Temperaturniveau in den Ofen transportiert werden, wird dem Innenraum Wärme entzogen. Dieser Wärmeverlust muß nun möglichst rasch ausgeglichen werden. Gleichzeitig darf die Regelung nicht zu sehr überschwingen, um die maximale Systemtemperatur nicht zu überschreiten.

Die FR-A1-2 690 736 beschreibt einen Muffelofen mit einer Rohrmuffelvorrichtung, einer Transportvorrichtung, einer Vorrichtung zum Erzeugen von Strahlungsemission durch die Muffelvorrichtung und mit einer Wärmekonvektionsvorrichtung. Der Muffelofen weist eine äußere Hülle auf, die um die Muffelvorrichtung angeordnet ist und einen Hohlraum dazwischen bildet. Die Vorrichtung zum Erzeugen von Strahlungsemission läßt eine heiße Flüssigkeit in dem Hohlraum zirkulieren, damit die Muffelvorrichtung Wärmestrahlung in die Lötzone abgibt.

Demgegenüber liegt der Erfindung die Aufgabe zugrunde, eine Vorrichtung zur Wärmeübertragung, insbesondere in einer Konvektionslötanlage oder in einer Trocknungsanlage zur Verfügung zu stellen, die ein sehr gleichmäßiges Temperaturverhalten aufweist und den Energieausgleich im Ofen möglichst schnell regelt.

Die Aufgabe wird mit den Merkmalen der Patentansprüche gelöst.

Bei der Lösung geht die Erfindung von dem Grundgedanken aus, mindestens einen Hohlkörper, der ein erwärmtes Fluid enthält, in der Nähe des Werkstücks, z.B. des Lötgutes anzuordnen, wobei das Fluid über die Wand des Hohlkörpers Wärme an das Werkstück abgibt. Das Fluid kann Dampf oder eine Flüssigkeit sein, wodurch eine sehr genaue Temperatureinstellung gewährleistet und eine hohe Wärmekapazität vorhanden ist. Dabei ist das erwärmte Fluid eingeschlossen und von dem zu erwärmenden Werkstück getrennt.

Der Vorteil der Erfindung besteht darin, daß es möglich ist, die maximale Ofentemperatur auf einfache Weise exakt zu begrenzen, wobei ein extrem rascher Ausgleich der abgegebenen Wärme erfolgt und das System nicht überschwingen kann. Ferner geht das eingeschlossene Fluid nicht verloren, so daß Umweltbelastungen vermieden werden.

Im folgenden wird die Erfindung anhand der Zeichnungen näher erläutert. Es zeigen:

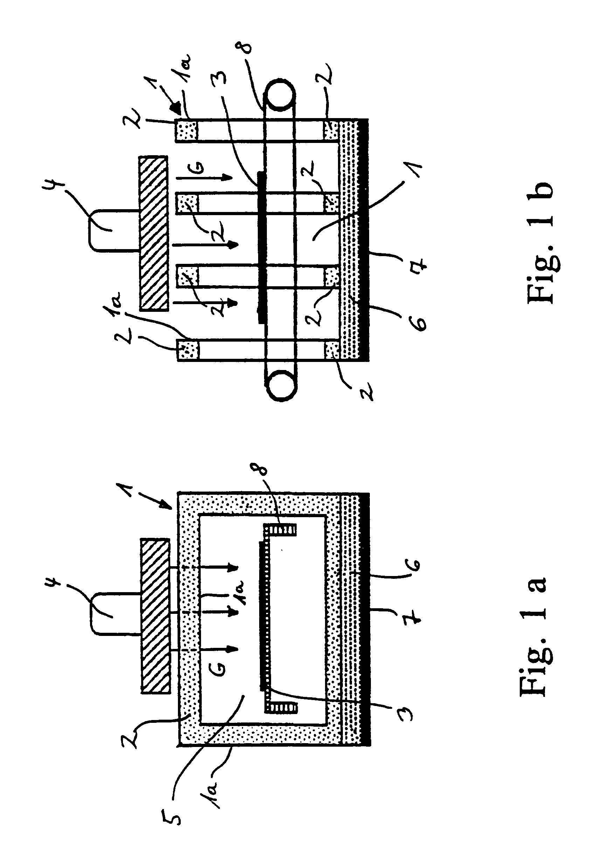

- Fig. 1a: eine schematische Darstellung einer erfindungsgemäßen Ausführungsform, und
- Fig. 1b: einen Querschnitt durch die erfindungsgemäße Ausführungsform gemäß Fig. 1a senkrecht zur Zeichnungsebene.

Fig. 1a zeigt eine bevorzugte Ausführungsform der erfindungsgemäßen Wärmeübertragungsvorrichtung in Verbindung mit einem Werkstückträger in einer Lötanlage. Ein Hohlkörper 1 bestehend aus mehreren Rohren umgibt einen Transportkanal 5, in dem ein Transportband 8 ein Werkstück (Lötgut) 3 trägt. Der Hohlkörper 1 enthält heißen Dampf, der in einem Flüssigkeitsbad 6 unterhalb der Rohre des Hohlkörpers 1 durch die Heizung 7 erzeugt wird. Mittels eines Gebläses 4 wird ein Gas G, z.B. Luft oder Stickstoff als Inertgas, gegen die Wand 1a des Hohlkörpers 1 geblasen, wobei ein Wärmeaustausch zwischen der Wand 1a und dem Gas G stattfindet. Diese Wärme wird zum Lötgut 3 transportiert und bewirkt dort den Lötvorgang. Die von der Oberfläche des Hohlkörpers 1 abgeführte Wärme wird durch die extrem gute Wärmeübertragung des an der Innenseite des Rohrs kondensierenden Dampfes sofort nachgeführt. Das heißt, je mehr Wärme an der Oberfläche abgeführt wird, desto mehr Dampf kondensiert und führt Wärme zu, um das System wieder ins Gleichgewicht zu bringen. Wenn der Transportkanal auf Betriebstemperatur erwärmt ist, stellt sich ein stabiles Temperaturgleichgewicht ein. Die Menge des Dampfes, der im Heizsystem produziert wird, muß nunmehr nur noch die Wärmeverluste des Systems ausgleichen. Dazu ist eine geringere Dampfmenge nötig als zum Aufheizen des Systems. Bedingt durch eine ausreichend dimensionierte Heizleistung, verfügt das System nun über ein zusätzliches Dampfpotential, das benötigt wird, um Systemverluste, wie sie bei der Erwärmung von einfahrenden Werkstücken 3 entstehen, auszugleichen. Fährt ein Werkstück 3 in den Ofen mittels des Transportbandes 8 ein, so wird dem System Wärme entzogen, und es wird durch die Gasströmung G derselbe Ablauf wie bei der Erwärmung des Transportkanals am Anfang in Gang gesetzt, bis das System wieder im Wärmegleichgewicht ist. Vorzugsweise wird im Flüssigkeitsbad 6 die gleiche Flüssigkeit eingesetzt, wie sie beim Dampfphasenlöten verwendet wird. Das System Flüssigkeitsbad-Hohlkörper ist vorzugsweise als offenes System ausgebildet. Dadurch kann es zu keiner nennenswerten Druckerhöhung im Hohlkörper kommen und die Temperatur des Dampfes kann den Siedepunkt der Flüssigkeit nicht überschreiten. Es kann somit die maximale Grenztemperatur des Systems sehr genau festgelegt werden, die z.B. bei 215 oder 290°C liegen kann.

Im Rahmen der Erfindung kann das System jedoch auch geschlossen sein, wobei durch geeignete Einstellung der Heizleistung und/oder der Energieverluste der Druck und damit der Siedepunkt bei einem gewünschten Wert stabil gehalten wird, um den Wärmetransport bei einer bestimmten Temperatur zu halten.

In Fig. 1b ist ein Querschnitt in Richtung des Transportbandes 8 dargestellt. Die Zwischenräume zwischen den Rohren des Hohlkörpers 1 gewährleisten den Wärmetransport mittels des Gases G zum Lötgut 3.

Die erfindungsgemäße Ausführungsform gemäß Figuren 1a und 1b hat unter anderem folgende Vorteile:
1. Die maximale Temperatur des Systems wird definiert durch die Arbeitstemperatur des Fluids und dadurch wird auch die maximale Temperatur des Transportkanals festgelegt;
2. Wenn Wärme von der Rohroberfläche abgeführt wird, wird dieser Wärmeverlust unverzüglich und ohne den Einsatz irgendwelcher Regelglieder ausgeglichen;.
3. Die Geschwindigkeit der Wärmeübertragung wird im wesentlichen vom Durchsatz der Luft bzw. der Geschwindigkeit der Luftströmung bestimmt;
4. Die Anschlußwerte eines solchen Systems liegen erheblich unterhalb der Leistungswerte der heute angebotenen Systeme;
5. Die Kosten bisher erhältlicher vergleichbarer Systeme können erheblich unterschritten werden.

Anstelle von Dampf kann der Hohlkörper 1 auch mit einer Flüssigkeit gefüllt werden, die in einem z.B. externen Heizsystem erwärmt wird. Diese Flüssigkeit wird in einer Heizeinheit auf ein bestimmtes Temperaturniveau erwärmt und in den Hohlkörper geleitet und dort umgewälzt. Dadurch steht eine hohe Wärmekapazität zur Verfügung. Die Regelung der Systemtemperatur erfolgt in der Heizeinheit. Diese Ausführungsform hat den Vorteil, daß sich die maximale Temperatur des Hohlkörpers über die Temperaturregelung variieren läßt. Es ist jedoch eine Regelung und Überwachung der Temperatur erforderlich. Außerdem ist ein Aggregat zur Umwälzung der Flüssigkeit notwendig.

Die Wärmeübertragung vom Hohlkörper zum Lötgut kann auch ausschließlich durch Wärmestrahlung erfolgen, und es ist auch eine Kombination von Strahlung und Konvektion möglich; gegebenenfalls können auch zusätzliche Heizstrahler eingesetzt werden.

Die erfindungsgemäße Vorrichtung kann vorzugsweise zur Erwärmung elektronischer Baugruppen beim Reflow-Löten verwendet werden. Ein weiterer Anwendungsfall ist das Reparaturlöten von Bauelementen, die entlötet bzw. erneut eingelötet werden sollen.

Die erfindungsgemäße Wärmeübertragungsvorrichtung kann auch z.B. in verkleinerter Form zum selektiven Erwärmen einer Baugruppe verwendet werden. Die Anlage ist dann so aufgebaut, daß sich die Vorrichtung in unmittelbarer Nähe zum zu erwärmenden Bauelement befindet. Eine Lufströmung, die durch das System geleitet wird, erhitzt sich auf die durch das Fluid definierte maximale Temperatur. Sie umstreicht das zu entlötende Bauelement und überträgt seine Wärme auf das Bauelement und die Leiterplatte. Da die Temperatur durch den Siedepunkt der Arbeitsflüssigkeit begrenzt ist, kann eine Beschädigung des Bauelements oder der Leiterplatte ausgeschlossen werden.

Die in der Zeichnung dargestellte Anlage ist zur Vermeidung von Wärmeverlusten vorzugsweise in einem nicht dargestellten geschlossenen Gehäuse mit Öffnungen oder Schleusen zum Zuführen und Abführen des zu wärmenden Werkstückes untergebracht.

## Patentansprüche

1. Vorrichtung zur Wärmeübertragung in einer Konvektionswärmeanlage, insbesondere in einer Konvektionslötanlage, mit einem Hohlkörper (1) und einem zugeordneten Flüssigkeitsbad (6) zum Erzeugen von Dampf ,
wobei der Dampf (2) über die Wand (1a) des Hohlkörpers (1) Wärme auf ein zu wärmendes Werkstuck (3) überträgt,
der Hohlkörper (1) einen Transportkanal (5) für das Werkstück (3) umgibt und
das Flüssigkeitsbad-Hohlkörper-System entweder als offenes System ausgebildet ist oder bei einem geschlossenen System Mittel aufweist zum stabilhalten des Drucks und damit den Siedepunkt bei einem gewünschten Wert.

2. Vorrichtung nach Anspruch 1 **dadurch gekennzeichnet, daß** die Wärmeübertragung von dem Hohlkörper (1) zu dem Werkstück (3) durch Wärmestrahlung erfolgt.

3. Vorrichtung nach Anspruch 1 oder 2, **dadurch gekennzeichnet, daß** die Wärmeübertragung von dem Hohlkörper (1) zu dem Werkstück (3) durch Konvektion erfolgt.

4. Vorrichtung nach Anspruch 1 oder 2, **dadurch gekennzeichnet, daß** die Wärmeübertragung von dem Hohlkörper (1) zu dem Werkstück (3) durch eine Kombination von Wärmestrahlung und Konvektion erfolgt.

5. Vorrichtung nach Anspruch 3 oder 4, **dadurch gekennzeichnet, daß** ein Gebläse (4) vorgesehen ist, wobei ein Gas (G) die Wand (1a) des Hohlkörpers (1) umströmt und dort Wärme aufnimmt und zu dem Werkstück (3) transportiert.

6. Vorrichtung nach Anspruch 5, **dadurch gekennzeichnet, daß** das Gas Luft ist.

7. Vorrichtung nach Anspruch 5, **dadurch gekennzeichnet, daß** als Gas ein sauerstofffreies Gas, vorzugsweise Stickstoff eingesetzt wird.

8. Vorrichtung nach einem der Anspruche 1 bis 7, gekennzeichnet, daß der Hohlkörper (1) mehrere Rohre aufweist.

9. Vorrichtung nach einem der Ansprüche 1 bis 8, **dadurch gekennzeichnet, daß** der Dampf aus einer beim Dampfphasenlöten verwendeten Flüssigkeit erzeugt wird.

10. Vorrichtung nach einem der Ansprüche 1 bis 9, **dadurch gekennzeichnet, daß** das Flüssigkeitsbad (6) und eine Heizung (7) unterhalb des Hohlkörpers (1) angeordnet sind.

11. Vorrichtung nach einem der Ansprüche 1 bis 10, **dadurch gekennzeichnet, daß** die Temperatur des Dampfes die des Siedepunkts der Flüssigkeit nicht überschreitet.

12. Verwendung der Vorrichtung nach einem der Ansprüche 1 bis 11 zur Erwärmung elektronischer Baugruppen beim Reflow-Löten.

13. Verwendung der Vorrichtung nach einem der Ansprüche 1 bis 11 zum Reparaturlöten von Rauelementen.

## Claims

1. A heat-transfer device in a convective-heat installation, in particular in a convective soldering installation, comprising a hollow body (1) and an associated liquid bath (6) for generating vapour,
wherein the vapour (2) transfers heat via the wall (1a) of the hollow body (1) to a workpiece (3) to be heated,
the hollow body (1) surrounds a transport channel (5) for the workpiece (3), and
the liquid bath-hollow body system is either configured as an open system or, if being configured as a closed system, comprises means for maintaining the pressure and thus the boiling point at a desired value.

2. The device according to claim 1, **characterized in that** the heat is transferred from the hollow body (1) to the workpiece (3) by heat radiation.

3. The device according to claim 1 or 2, **characterized in that** the heat is transferred from the hollow body (1) to the workpiece (3) by convection.

4. The device according to claim 1 or 2, **characterized in that** the heat is transferred from the hollow body (1) to the workpiece (3) by a combination of heat radiation and convection.

5. The device according to claim 3 or 4, **characterized in that** a fan (4) is provided, a gas (G) flowing around the wall (1a) of the hollow body (1) and taking up and transporting heat to the workpiece (3).

6. The device according to claim 5, **characterized in that** the gas is air.

7. The device according to claim 5, **characterized in that** an oxygen-free gas, preferably nitrogen, is used as the gas.

8. The device according to any one of claims 1 to 7, **characterized in that** the hollow body (1) comprises a plurality of tubes.

9. The device according to any one of claims 1 to 8, **characterized in that** the vapour is produced from a liquid used in vapour phase soldering.

10. The device according to any one of claims 1 to 9, **characterized in that** the liquid bath (6) and a heating unit (7) are arranged below the hollow body (1).

11. The device according to any one of claims 1 to 10, **characterized in that** the temperature of the vapour does not exceed that of the boiling point of the liquid.

12. Use of the device according to any one of claims 1 to 11 for heating electronic componentries during reflow soldering.

13. Use of the device according to any one of claims 1 to 11 for repair soldering of components.

## Revendications

1. Dispositif pour le transfert de chaleur dans une installation de chauffage par convection, en particulier dans une installation de brasage par convection, comportant un corps creux (1) et un bain de liquide associé (6) pour générer de la vapeur, dans lequel :
la vapeur (2) transmet de la chaleur via la paroi (1a) du corps creux (1) jusqu'à une pièce à oeuvrer (3) à chauffer,
le corps creux (1) entoure un canal de transport (5) pour la pièce à oeuvrer (3), et
le système corps creux/bain de liquide est réalisé soit sous forme de système ouvert soit sous forme de système fermé comportant des moyens pour maintenir stable la pression et ainsi le point d'ébullition à une valeur désirée.

2. Dispositif selon la revendication 1, **caractérisé en ce que** le transfert de chaleur depuis le corps creux (1) vers la pièce à oeuvrer (3) s'effectue par rayonnement thermique.

3. Dispositif selon l'une ou l'autre des revendications 1 et 2, **caractérisé en ce que** le transfert de chaleur depuis le corps creux (1) vers la pièce à oeuvrer (3) s'effectue par convection.

4. Dispositif selon l'une ou l'autre des revendications 1 et 2, **caractérisé en ce que** le transfert de chaleur depuis le corps creux (1) vers la pièce à oeuvrer (3) s'effectue par une combinaison de rayonnement thermique et de convection.

5. Dispositif selon l'une ou l'autre des revendications 3 et 4, **caractérisé en ce qu'**il est prévu une soufflerie (4), au moyen de laquelle un gaz (G) s'écoule autour de la paroi (1a) du corps creux (1) et absorbe ici de la chaleur et la transporte jusqu'à la pièce à oeuvrer (3).

6. Dispositif selon la revendication 5, **caractérisé en ce que** le gaz est de l'air.

7. Dispositif selon la revendication 5, **caractérisé en ce que** le gaz est un gaz exempt d'oxygène, de préférence de l'azote.

8. Dispositif selon l'une des revendications 1 à 7, **caractérisé en ce que** le corps creux (1) comprend plusieurs tubes.

9. Dispositif selon l'une des revendications 1 à 8, **caractérisé en ce que** la vapeur est générée à partir d'un liquide utilisé lors du brasage en phase vapeur.

10. Dispositif selon l'une des revendications 1 à 9, **caractérisé en ce que** le bain de liquide (6) et un chauffage (7) sont agencés au-dessous du corps creux (1).

11. Dispositif selon l'une des revendications 1 à 10, **caractérisé en ce que** la température de la vapeur ne dépasse pas celle du point d'ébullition du liquide.

12. Application du dispositif selon l'une des revendications 1 à 11 pour chauffer des groupes structurels électroniques lors du brasage dit "reflow" (par fusion).

13. Application du dispositif selon l'une des revendications 1 à 11 pour le brasage de réparation de composants.
